# FASCICULE DE BREVET EUROPEEN

(11) **EP 1 169 213 B1**
(45) Date de publication et mention de la délivrance du brevet: **20.10.2004**
(21) Numéro de dépôt: 00922868.5
(22) Date de dépôt: 19.04.2000
(51) Int. Cl.: B62H 5/00

(54) **EQUIPEMENT ANTIVOL DE MOTOCYCLETTE**
DIEBSTAHLSICHERUNG FÜR MOTORRAD
ANTI-THEFT DEVICE FOR A MOTORCYCLE

(30) Priorité: 19.04.1999 FR 9904867
(43) Date de publication de la demande: 09.01.2002
(73) Titulaire: Zadi S.p.A., 41012 Carpi (Modena) (IT)
(72) Inventeur: LEVY, Anne, 75003 Paris (FR)
(74) Mandataire: Gotra, Stefano
(86) Numéro de dépôt international: PCT/IT2000/000160
(87) Numéro de publication internationale: WO 2000/063064

(56) Documents cités:
- EP-A- 0 077 431
- DE-U- 29 619 966
- FR-A- 2 738 792
- GB-A- 2 284 188

## Description

### Domaine Technique

La présente invention concerne un équipement antivol de motocyclette.

### Technique Anterieure

Le vol des motocyclettes constitue un problème particulièrement délicat. Bien que certaines motocyclettes soient volées par enlèvement avec un véhicule équipé d'une grue, dans la majorité des cas le vol des motocyclettes se fait par la simple mise hors service du contact à clef.

Il existe certes, selon l'état de la technique, des dispositifs de verrouillage d'une roue pour créer un moyen mécanique interdisant le vol de la motocyclette. Toutefois, ces moyens sont en général constitués par des verrous cadenassés. Ils sont donc accessibles et présentent la vulnérabilité des serrures. De plus, lorsque la serrure se trouve au niveau de la béquille de la motocyclette, cette serrure est exposée à l'humidité et à la saleté. ce qui la rend particulièrement peu fiable.

La présente invention a pour but de créer un équipement antivol de type électromécanique, interdisant l'utilisation de la motocyclette ou en gênant considérablement son utilisation en étant difficilement accessible à des tentatives d'effraction.

Diverses solutions de béquilles dites de sécurité utilisant des moyens de blocage tels que serrures ou verrous sont proposées.

Le document FR 2 667 563 A propose un dispositif constitué d'un doigt de verrouillage mécanique du corps de la béquille pivotant sur un axe solidaire du véhicule qui, actionné par une clef, permet le blocage de la béquille en position de stationnement.

Le document FR 2 738 792 A1 propose également un dispositif de verrouillage de la béquille constitué d'un doigt qui se déplace axialement grâce à un engrenage mû par un moteur électrique. Lorsque le doigt est engagé dans le logement de la béquille, celle-ci ne peut pas être escamotée.

Le document FR 2 741 585 A propose un système de verrouillage utilisant une targette qui, mise en place dans son logement à l'aide d'une clef, gène le déplacement d'un véhicule à deux roues.

D'autres documents tel le brevet FR 2 748 444 A proposent également des dispositifs de blocage de béquille utilisant un verrou mécanique commandé par une clef, qui lorsque la béquille est en position de stationnement, peut être engagé dans un logement et gêner ainsi l'utilisation du véhicule.

La présente invention a pour but de pallier les problèmes que présentent de telles béquilles. En effet, un tel dispositif antivol doit apporter tant aux utilisateurs qu'aux compagnies d'assurances, le niveau de sécurité et de fiabilité requis.

L'invention se rapporte à un dispositif antivol de véhicule à deux ou trois roues de type motocyclette à moteur thermique ou électrique comme défini par la première revendication.

Le dispositif comprend: un actionneur électromécanique ou pneumatique, installé dans le corps de la
- béquille, déplaçant un verrou (2) entre les dites deux positions, dans l'orifice (5) situé dans l'axe (4) de la béquille,
- un circuit de commande (13) relié à un récepteur (14) pour recevoir un signal de commande autorisant le fonctionnement de l'actionneur (3) suivant le signal de commande,
- un récepteur (14) recevant un signal codé pour autoriser le circuit de commande (13).

L'ensemble du dispositif est alimenté, directement ou indirectement par l'énergie électrique produite par le véhicule. Le signal de commande du circuit de commande est nécessaire pour permettre l'alimentation de l'actionneur électromécanique (3).

L'actionneur électromécanique (3) peut également être alimenté directement à travers le circuit de commande, en plus de la transmission d'un signal de commande de préférence codé émis par le circuit de commande qui autorise également l'alimentation en ouvrant un relais interne. L'absence de ce signal de commande interdisant l'escamotage du verrou (2) y compris dans le cas où il est raccordé directement sur la source d'énergie.

Le récepteur qui reçoit le signal codé d'autorisation peut être un clavier pour l'introduction d'un signal codé, il peut également s'agir d'un récepteur optoélectronique avec un port infrarouge recevant un signal infrarouge codé, émis par un boîtier à émetteur infrarouge pour transmettre le signal infrarouge codé.

Le récepteur peut également comporter un lecteur de signaux magnétiques.

De façon avantageuse, le récepteur comprend au moins l'un des moyens choisis dans le groupe formé par:
- un clavier pour introduire un code,
- un récepteur radio et un boîtier mobile communiquant avec le récepteur radio pour lui fournir un signal,
- un récepteur à lecteur magnétique pour un carte magnétique,
- un récepteur optoélectronique pour une carte codée ou pour communiquer avec un boîtier à émetteur optoélectronique,
- le circuit de commande autorise le fonctionnement de l'actionneur électromécanique (3) pour permettre le passage de la béquille (1) de sa position active à sa position de repos ou inversement, en autorisant l'alimentation de l'actionneur électromécanique.

Le circuit de commande autorise le fonctionnement de l'actionneur électromécanique (3) en lui envoyant un signal codé autorisant son alimentation à partir d'une source d'énergie (batterie).

L'actionneur (3) est alimenté à travers le circuit de commande et reçoit en parallèle un signal de commande.

### Exposé de l'Invention

La présente invention sera décrite ci-àprès à l'aide des dessins schématiques de l'équipement antivol objet de l'invention.

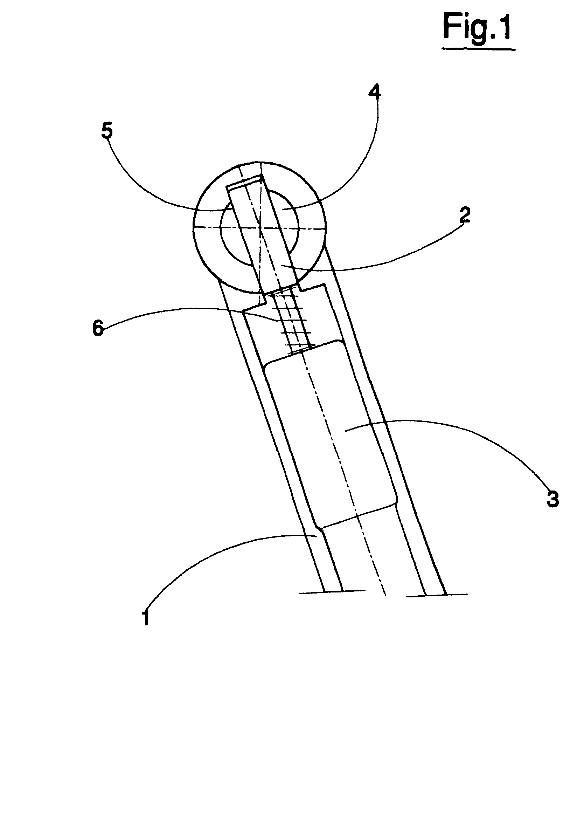

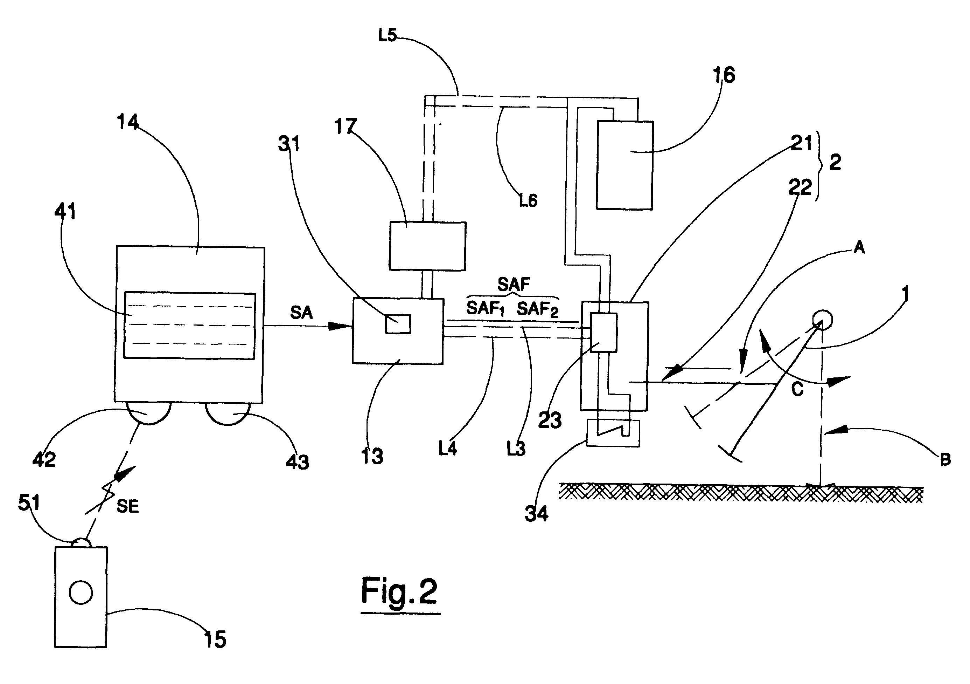

Selon les figures 1 et 2, l'invention concerne un équipement antivol de motocyclette comprenant une béquille (1).

Cette béquille (1), en général placée entre les deux roues de la motocyclette, peut passer, par pivotement, d'une position escamotée ou position de repos (A) dans laquelle elle n'intervient pas dans la conduite de la motocyclette à une position active ou position d'interdiction (B) dans laquelle la béquille (1) s'appuie sur le sol et soulève ou pas, une partie de la motocyclette qui ne repose plus alors que sur la béquille (1) et l'une des deux roues. En général, la béquille (1) est formée par deux pieds. Elle peut également être constituée par une seule branche et dans ce cas, le dispositif peut être complété d'un dispositif de mémorisation de position à contact. Lorsque la béquille (1) est en position active, la motocyclette repose sur la béquille (1) et les deux roues.

La béquille (1) est dotée d'un dispositif de verrouillage constitué d'un actionneur électromécanique (3) ou pneumatique, qui agit perpendiculairement à l'axe (4) ou à toute autre pièce solidaire du support de mouvement de la béquille (1).

Quel que soit le mode retenu pour actionner le dispositif, celui-ci est constitué d'au moins un actionneur (3), situé dans le corps de la béquille (1) et d'au moins un élément mobile (2) qui en se déplaçant longitudinalement ou dans un autre axe par rapport aux jambes de la béquille (1) pénètre dans l'orifice dédié (5) situé dans l'axe (4) de la béquille (1) lorsque celle-ci est en position de stationnement. Lorsque le véhicule est à l'arrêt, la béquille (1) est actionnée vers le sol, elle pivote alors sur l'axe (4) jusqu'à la position prévue pour le stationnement. L'orifice (5) situé dans l'axe (4) de la béquille (1) destinée à recevoir le verrou (2) est placé de telle façon que le verrou (2) entre automatiquement à l'aide d'un moyen mécanique, dans un mode préféré le ressort (6), dans l'orifice (5) interdisant ainsi l'utilisation de la motocyclette, le béquille (1) étant verrouillée sur son axe (4).

Dans cette position de sécurité engagée, la béquille (1) se trouve donc verrouillée sans aucune consommation d'énergie.

Lorsque le circuit de commande autorise le déverrouillage de la béquille (1), l'actionneur électromécanique (3) est alimenté, le verrou (2) est extrait de l'orifice (5) situé dans l'axe (4) de la béquille (1).

Dans un autre mode de réalisation, le déplacement du verrou (2) peut être opéré par un micromoteur alimenté électriquement, qui actionne, alternativement dans un sens et dans l'autre, un verrou (2) autorisant dans un sens le verrouillage de la béquille (1) en position active lorsque le verrou (2) est logé dans l'orifice (5). et dans l'autre sens, de ramener le verrou (2) à sa position de départ, sécurité désactivée lorsqu'il est désengagé de l'orifice (5).

La béquille (1) peut alors être ramenée en position escamotée. Lorsque la béquille (1) atteint cette position "route", un contact de fin de course (34) positionné en un emplacement adéquat coupe l'alimentation électrique de l'actionneur électromécanique (3).

L'actionneur (3) est relié à un circuit de commande ( 13) qui lui transmet un signal d'autorisation de fonctionner (SAF) selon le signal d'autorisation (SA) reçu par le circuit de commande à partir du récepteur (14). Le récepteur (14) relié au circuit de commande (13) reçoit un signal d'autorisation (SA) de l'utilisateur de la motocyclette.

Ce signal d'autorisation codé est appliqué au récepteur (14) sous la forme d'un code introduit dans le récepteur par l'intermédiaire d'un clavier (41). Il peut également comporter un récepteur (42) par exemple optoélectronique, communiquant avec un boîtier (15) également optoélectronique, émettant par son émetteur (51) un signal d'autorisation (SE) lorsqu'il est actionné par l'utilisateur. En variante, le récepteur peut comporter un lecteur magnétique (43) pour coopérer avec une carte magnétique codée à la disposition de l'utilisateur.

Pour simplifier les circuits, le signal codé que reçoit le récepteur (14) est de préférence unique pour le mouvement de l'actionneur électromécanique (3), ce signal étant transformé par une fonction logique (31) dans le circuit de commande (13) en un signal approprié de verrouillage (SAF1) ou de déverrouillage (SAE2) de la béquille (1) pour la mise en oeuvre de l'actionneur électromécanique (3). Cette combinaison logique peut s'obtenir très simplement en ce que le dernier signal exécuté par le circuit de commande (13) est enregistré dans une mémoire. Dans ce mode de réalisation, le nouveau signal, trasmis après un signal précédent, ne peut dans ces conditions donner lieu qu'à un signal de commande de l'actionneur électromécanique (3) qui est opposé au signal précédemment transmis.

L' actionneur (3) est alimenté à partir d'une source d'énergie (16).

Dans le cas le plus simple, le circuit de commande (13) envoie à l'actionneur électromécanique (3) un signal d'autorisation (signal à deux états SAF SAF1 SAF2) qui autorise l'alimentation du dispositif de verrouillage à partir de la source d'énergie (16) et le fonctionnement de l'actionneur (3) dans le sens approprié, c'est-à-dire de la désactivation du verrou (2).

Dans un mode préféré, le verrou (2) est placé automatiquement en position active de sécurité grâce au ressort (6) dès que la béquille (1) est mise en oeuvre.

Le déplacement du verrou (2) peut indifféremment être actionné par tout moyen électrique, pneumatique ou mécanique.

Il peut également être intéressant, dans un but de compliquer le court-circuitage de l'équipement antivol, d'assurer l'alimentation électrique du circuit de verrouillage à travers le circuit de commande (13) avec en parallèle toujours l'envoi d'un signal de commande codé (SAF) autorisant l'alimentation effective de l'actionneur électromécanique (3).

L'alimentation directe de l'actionneur (3) est figurée par les deux lignes L1, L2 reliées à un interrupteur (relais) commandé (23). L'alimentation indirecte à travers le circuit de commande (13) se fait par les lignes L3, L4, le circuit (13) étant relié à la source d'énergie (batterie) (16) par les lignes L5, L6, au travers d'un convertisseur de courant (17).

Enfin, le circuit de commande (13) peut être relié à la clef de contact de la motocyclette pour qu'après l'arrêt du moteur, le circuit de commande commande, de manière automatique et temporisée, la mise en oeuvre de l'actionneur électromécanique (3) de la béquille (1).

Une seconde sécurité peut être assurée par le circuit de commande (13) pour éviter que l'utilisateur ne tente d'utiliser sa motocyclette sans avoir escamoté la béquille (1). Pour cela, le circuit de commande (13) comporte un circuit logique interdisant le lancement du moteur aussi longtemps que la béquille (1) est en position active de stationnement.

Une troisième sécurité contre le vol consiste à transformer le courant d'alimentation du dispositif à l'aide d'un convertisseur (17), par exemple 12/24 volts.

La présente invention est notamment destinée à des motocyclettes ou véhicules de ce type. Bien que son principal but soit celui des motocyclettes d'une certaine cylindrée, l'invention n'est pas sans intérêt pour des motocyclettes même de faible cylindrée car, même dans celles-ci la béquille (1) constitue un obstacle antivol très sérieux.

Enfin, et quoique non représentés, les différents moyens de l'invention sont intégrés autant que possible dans les parties carénées ou cachées de la motocyclette. Il en est ainsi notamment de l'actionneur pour éviter ou compliquer toute atteinte telle que par exemple une tentative de sciage d'un quelconque élément métallique du dispositif.

Une autre particularité avantageuse de l'invention est que sa mise en place ou adaptation sur le véhicule ne nécessite généralement pas de remplacer la béquille (1) montée d'origine par le constructeur du véhicule.

Le circuit de commande (13) tel que décrit dans la présente invention autorise la connexion avec tout type d'alarme de position, sonore, visuelle, transmission réseaux, etc.

## Revendications

1. Equipement antivol pour motocyclettes, comprenant une béquille (1) mobile entre une position escamotée ou de route et une position active ou de stationnement, et un dispositif de verrouillage de la dite béquille interdisant l'utilisation de la motocyclette, **caractérisé en ce qu'**il comprend:
a) un actionneur électromécanique ou pneumatique, installé dans le corps de la béquille, déplaçant un verrou (2) entre les dites deux positions, dans l'orifice (5) situé dans l'axe (4) de la béquille,
b) un circuit de commande (13) relié à un récepteur (14) pour recevoir un signal de commande autorisant le fonctionnement de l'actionneur (3) suivant le signal de commande,
c) un récepteur (14) recevant un signal codé pour autoriser le circuit de commande (13).

2. Équipement selon la revendication 1, **caractérisé en ce que** le récepteur (14) comprend au moins l'un des moyens choisis dans le groupe formé par:
- un clavier (41) pour introduire un code,
- un récepteur radio (42) et un boîtier mobile (15) communiquant avec le récepteur radio pour lui fournir un signal,
- un récepteur à lecteur magnétique (43) pour une carte magnétique à contact ou distante,
- un récepteur optoélectronique (42) pour une carte codée ou pour communiquer avec un boîtier à émetteur optoélectronique (15).

3. Équipement selon la revendication 1, **caractérisé en ce que** le circuit de commande (13) autorise le fonctionnement de l'actionneur électromécanique (3) pour faire passer la béquille (1) de sa position active (B) à sa position de repos (A), en autorisant (SAF) l'alimentation de l'actionneur (3) dans le sens approprié.

4. Équipement selon la revendication 1, **caractérisé en ce que** l'actionneur (3) déplaçant le verrou (2) est un actionneur électromécanique, pneumatique ou hydraulique.

5. Équipement selon la revendication 1, **caractérisé en ce que** le verrou (2) commandé par l'actionneur (3) entre automatiquement quel que soit le mode choisi, dans l'orifice (5) lorsque la béquille (1) est en position active ou de stationnement.

6. Équipement selon la revendication 1, **caractérisé en ce que** le circuit de commande (13) autorise le fonctionnement de l'actionneur (3) en lui envoyant un signal codé autorisant son alimentation (SAF, 23) à partir d'une source d'énergie (16) (source électrique, source pneumatique, source hydraulique).

7. Équipement selon la revendication 1, **caractérisé en ce que** l' actionneur (3 ) est alimenté à travers le circuit de commande (13) et un quelconque moyen de conversion de tension (7) et reçoit en parallèle un signal de commande (SAF).

8. Équipement selon l'une quelconque des revendications précédentes, **caractérisé en ce que**, appliqué à tous types de béquilles (1), il peut être exploité en liaison avec un quelconque capteur de position à contact.

9. Équipement selon l'une quelconque des revendications précédentes, **caractérisé en ce que** quelque soit le moyen d'alimentation de l'actionneur (3), lorsque la béquille (1) est placée en position active, sécurité engagée, l'alimentation d'énergie de l'actionneur est interrompue.

## Patentansprüche

1. Diebstahlssicherung für Motorräder, enthaltend einen Ständer (1), der zwischen einer eingezogenen oder Fahrposition und einer aktiven oder Standposition beweglich ist, sowie eine Sperrvorrichtung für den genannten Ständer, welche die Benutzung des Motorrades verhindert, **dadurch gekennzeichnet, dass** sie wie folgt enthält:
a. einen elektromechanischen oder pneumatischen Trieb, installiert im Körper des Ständers, der einen Riegel (2) zwischen den genannten beiden Positionen in einer Bohrung (5) in der Achse (4) des Ständers verschiebt;
b. einen Steuerkreis (13), angeschlossen an einen Empfänger (14) für den Empfang eines Auslösesignals, welches den Betrieb des Triebes (3) je nach dem Steuersignal erlaubt;
c. einen Empfänger (14), der ein kodiertes Signal zur Befähigung des Steuerkreises (13) empfängt.

2. Diebstahlssicherung nach Patentanspruch 1, **dadurch gekennzeichnet, dass** der Empfänger (14) wenigstens eins der Mittel enthält, gewählt aus der aus folgenden Elementen gebildeten Gruppe:
- eine Tastatur (41) zur Eingabe einer Codenummer;
- einen Funkempfänger (42) und ein tragbares Gehäuse (15), das mit dem Funkempfänger in Verbindung steht, um ein Signal zu liefern;
- einen Empfänger mit magnetischer Ablesevorrichtung (43) für eine Magnetkarte im Kontakt oder im Fernbetrieb;
- einen optoelektronischen Empfänger für eine kodierte Karte oder zur Verbindung zu einem Gehäuse mit optoelektronischem Sender (15);

3. Diebstahlssicherung nach Patentanspruch 1, **dadurch gekennzeichnet, dass** der Steuerkreis (13) den Betrieb des elektromechanischen Triebes (3) befähigt, um den Ständer (1) aus seiner aktiven Position (B) in seine Ruhestellung (A) gehen zu lassen, wobei die Speisung (SAF) des Triebes (3) in der geeigneten Richtung freigegeben wird.

4. Diebstahlssicherung nach Patentanspruch 1, **dadurch gekennzeichnet, dass** der Trieb (3) welcher den Riegel (2) verschiebt, ein elektromechanischer, pneumatischer oder hydraulischer Trieb ist.

5. Diebstahlssicherung nach Patentanspruch 1, **dadurch gekennzeichnet, dass** der durch den Trieb (3) ausgelöste Riegel (2), welche Weise auch immer gewählt ist, sich automatisch in die Bohrung (5) einschiebt, wenn der Ständer (1) sich in der aktiven oder Standposition befindet.

6. Diebstahlssicherung nach Patentanspruch 1, **dadurch gekennzeichnet, dass** der Steuerkreis (13) den Betrieb des Triebes (3) befähigt, wobei er an diesen ein kodiertes Signal aussendet, das dessen Speisung (SAF, 23) aus einer Energiequelle (16) freigibt (elektrische, pneumatische, hydraulische Quelle).

7. Diebstahlssicherung nach Patentanspruch 1, **dadurch gekennzeichnet, dass** der Trieb (3) über den Steuerkreis (13) und einen beliebigen Spannungswandler (7) gespeist wird und parallel ein Auslösesignal (SAF) empfängt.

8. Diebstahlssicherung nach einem beliebigen der vorstehenden Patentansprüche, **dadurch gekennzeichnet, dass** sie, angebracht an allen Typen von Ständern (1), in Kombination mit einem beliebigen Positionsfühler im Kontakt verwendet werden kann.

9. Diebstahlssicherung nach einem beliebigen der vorstehenden Patentansprüche, **dadurch gekennzeichnet, dass**, welches auch immer das Speisungsmittel des Triebes (3) sein mag, die Energiezufuhr des Triebes unterbrochen ist, wenn der Ständer ( 1 ) sich in der aktiven Position befindet und das Sicherheitsmittel eingerastet ist.

## Claims

1. An anti-theft device for motor cycles, comprising a stand (1) which is mobile between a recessed position and an active position in which the motor cycle is parked, and a blocking device for the stand which prevents use of the motor cycle, **characterised in that** it comprises:
a) an electro-mechanical or pneumatic actuator, installed in a body of the stand (1), which displaces a bolt (2) between the active and the recessed positions, which actuator is located in a hole (5) positioned in an axle (4) of the stand (1);
b) a control circuit (13) connected to a receiver (14) for receiving a command signal which enables the actuator (3) to operate upon receiving the command signal;
c) the receiver (14) receiving an encoded signal in order to authorise the control circuit (13).

2. The anti-theft device of claim 1, **characterised in that** the receiver (14) comprises at least one of a following group of means:
a keyboard (41) for introducing a code;
a radio receiver (42) and a mobile box (15) communication with the radio receiver, for providing a signal;
a receiver with a magnetic reader (43) for a magnetic card, either a contact card or a card operating remotely;
an opto-electronic receiver for a code-bearing card or for communicating with an opto-electronic transmitter box (15).

3. The anti-theft device of claim 1, **characterised in that** the control circuit (13) authorises operation of the electro-mechanical actuator (3) to move the stand (1) from the active position thereof (B) to the recessed position thereof (A), authorising (SAF) a movement of the actuator (3) in an appropriate direction.

4. The anti-theft device of claim 1, **characterised in that** the actuator (3) which displaces the bolt (2) is an electro-mechanical, pneumatic or hydraulic actuator.

5. The anti-theft device of claim 1, **characterised in that** the bolt (2) commanded by the actuator (3) enters automatically, whatever type of actuator power source is used, into the hole (5) when the stand (1) is in an active position.

6. The anti-theft device of claim 1, **characterised in that** the control circuit (13) authorises operation of the actuator (3) by sending thereto an encoded signal which authorises supply of energy thereto (SAF) from an energy source (16) (electrical source, pneumatic source, hydraulic source).

7. The anti-theft device of claim 1, **characterised in that** the actuator (3) is supplied through the control circuit (13) and a voltage conversion means (7) of any type, and receives in parallel a command signal (SAF).

8. The anti-theft device of any one of the preceding claims, **characterised in that** the device is applicable to any type of stand (1) and can be used in combination with any type of contact position sensor.

9. The anti-theft device of any one of the preceding claims, **characterised in that** whatever means of energy supply is used for the actuator (3), when the stand (1) is arranged in an active position thereof, and the security means is engaged, the supply of energy to the actuator (3) is interrupted.
